# EUROPEAN PATENT SPECIFICATION

(11) **EP 1 239 173 B1**
(45) Date of publication and mention of the grant of the patent: **09.08.2006**
(21) Application number: 02004781.7
(22) Date of filing: 01.03.2002
(51) Int. Cl.: F16C 33/78

(54) **Sealing means for a rolling contact bearing**
Dichtungssystem für ein Wälzlager
Moyen d'étanchéité pour un palier à contact de roulement

(30) Priority: 05.03.2001 JP 2001059751
(43) Date of publication of application: 11.09.2002
(73) Proprietor: MINEBEA Co., Ltd., Kitasaku-gun, Nagano-ken (JP)
(72) Inventor: Machida, Shinichi, 63225 Langen (DE)
(74) Representative: Müller, Frank Peter

(56) References cited:
- EP-A- 0 976 939
- DE-A- 2 930 462
- DE-A- 4 215 905
- DE-A- 4 329 398
- US-A- 4 906 009
- PATENT ABSTRACTS OF JAPAN vol. 1999, no. 13, 30 November 1999 (1999-11-30) & JP 11 230179 A (NIPPON SEIKO KK), 27 August 1999 (1999-08-27)

## Description

### BACKGROUND OF THE INVENTION

### Field of the Invention

The present invention relates to a sealing structure of a ball bearing and more particularly to a sealing structure of a ball bearing wherein a seal or a shield is provided on at least one side of the ball bearing to further improve the sealing performance.

### Description of the Prior Art

As ball bearings, which are a kind of rolling bearings, have heretofore been available a shield ball bearing wherein a shield formed by a stainless steel plate is provided on a side of the bearing and a seal ball bearing wherein a seal formed of such a material as synthetic rubber or thermoplastic resin or elastomer is provided on a side of the bearing.

In the shield ball bearing, the invasion of foreign matter or dust from the exterior to the interior of the bearing is prevented, and in the case where grease is sealed in the interior of the bearing, leakage of the grease to the exterior is prevented. In the seal ball bearing, the sealing performance is enhanced to a greater extent than that in the shield ball bearing, and the invasion of foreign matter or dust from the exterior into the bearing and the leakage of grease sealed in the interior of the bearing are prevented more effectively.

Generally, such a shield or seal is provided fixedly on an outer ring of a ball bearing. A singe shield (seal) type with the shield (seal) provided on only one side of the bearing and a double shield (seal) type with the shield (seal) provided on both sides of the bearing are available. Usually, the shield is provided on an outer ring spacing a slight gap against an inner ring so as not to contact the inner ring, while as to the seal there are known a non contact type wherein the seal is provided so as not to contact the inner ring and a contact type wherein the seal is provided in contact with the inner ring.

DE 43 29 398 A1 discloses a ball bearing having a double seal, wherein the seals contact the inner ring and a labyrinth gap is formed between eah seal and the outer ring.

No matter which structure and type of a ball bearing may be used, applications have recently been increasing in which the ball bearing is expected as being a component capable of exhibiting a still higher sealing performance.

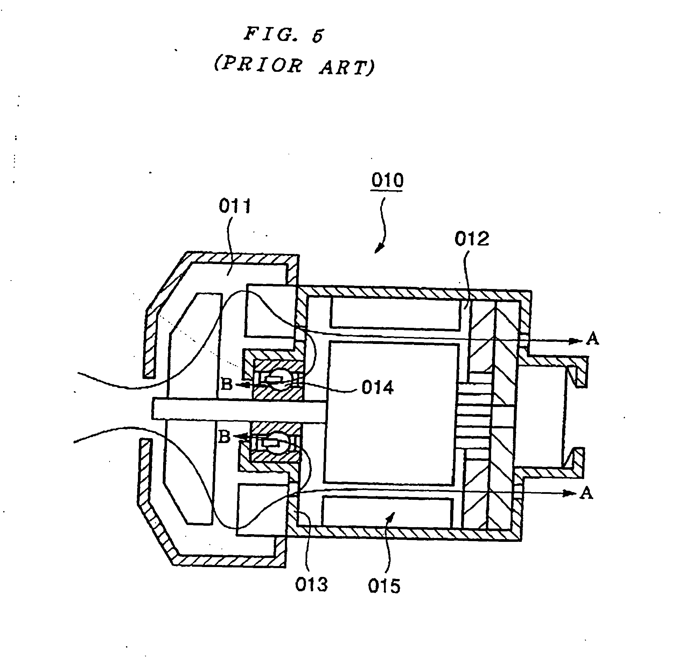

For example, in a conventional vacuum cleaner 010 as an example of application of a ball bearing provided with a seal or a shield, as shown in Fig. 5, a high-pressure air present in a fan driving motor receptacle chamber 012 which also serves as a discharge chamber may flow reverse toward a fan receptacle chamber 011 through a ball bearing 014 mounted to a wall 013 which partitions between the fan receptacle chamber 011 and the motor receptacle chamber 012. In Fig. 5, a streamline A represents a normal air flow, while a streamline B represents the above reversing air flow toward the fan receptacle chamber 011. Once such a phenomenon occurs, the power consumption of a motor 015 increases and the efficiency of the device with the ball bearing applied thereto is deteriorated; besides, grease sealed in the ball bearing 014 leaks out, resulting in burnout of the bearing and shortening life of the device.

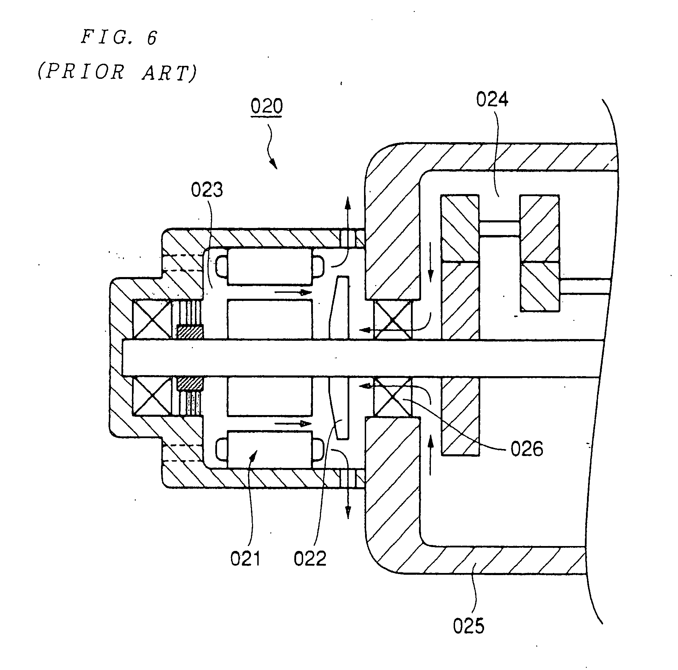

Likewise, in a motor-driven tool 020 as another example of application of a ball bearing, as shown in Fig. 6, grease present in a gear receptacle chamber 024 may leak into a motor-fan receptacle chamber 023 accommodating both a drive motor 021 and a motor cooling fan 022, through a ball bearing 026 mounted to a wall which is a part of a wall of a gear box 025 defining the gear receptacle chamber 024 and which partitions between the motor-fan receptacle chamber 023 and the gear receptacle chamber 024. This is because the grease present in the gear receptacle chamber 024 is sucked out to the motor-fan receptacle chamber 023 through the ball bearing 026 by virtue of a negative pressure present at a central part of the fan 022. The occurrence of such a phenomenon not only deteriorates the meshing efficiency of gears disposed within the gear box 025 but also results in burnout of gears and shortening life of the device.

The same phenomenon can occur also in the case where a bearing portion of a rotary shaft of an impeller is exposed to a high-pressure fluid on a discharge side in a blower wherein the difference in pressure between a suction side and the discharge side is large.

In such various cases as referred to above, it has come to be expected more and more keenly for the ball bearing to function as a component capable of preventing flowing or leakage of air or grease through the ball bearing between spaces defined on both sides of the ball bearing mounted in the bearing portion concerned or as a component capable of preventing grease sealed in the ball bearing itself from leaking out to a lower-pressure space located on one side of the ball bearing.

### SUMMARY OF THE INVENTION

The present invention has been accomplished for solving the above-mentioned problems involved in the conventional ball bearing sealing structure and it is an object of the present invention to provide a ball bearing sealing structure capable of effectively preventing, with a simple structure, flowing or leakage of fluid through the ball bearing between spaces formed on both sides of the ball bearing mounted in a bearing portion, also capable of effectively preventing grease sealed in the ball bearing itself from leaking into a lower-pressure space formed on one side of the ball bearing, and thus exhibiting a further improved sealing performance.

This object is achieved with the bearing according to claim 1.

According to this ball bearing, upon rotation of the outer ring, the seal rotates together with the outer ring, and the blade projections formed on the outer surface of the seal cause fluid which is in contact with the said outer surface to be scattered radially outward from the inside by virtue of centrifugal force in an apparatus or equipment to which the ball bearing is applied. The blade projections exhibit a pumping action for a fluid which is in contact with the outer surface of the seal.

The ball bearing is disposed so that the side (one side of the ball bearing) with the blade projections-formed seal provided thereon faces the space higher in pressure out of the spaces formed on both sides of the ball bearing, whereby fluid present near the inner ring is scattered radially outward in the space higher in pressure, resulting in that the pressure in this region drops and a pressure difference between fluids present near the inner ring in both spaces partitioned by the ball bearing decreases or reverses.

As a result, undesirable flowing or leakage of fluid from the space higher in pressure to the space lower in pressure through the ball bearing is suppressed and the amount of such flowing or leaking fluid is reduced to a remarkable extent, permitting the ball bearing to exhibit a high sealing performance. Besides, the leakage of fluid (grease) sealed in the ball bearing to the lower-pressure space is suppressed and the amount of such leaking fluid is decreased to a remarkable extent, whereby the ball bearing can exhibit a high sealing performance

In a preferred embodiment of the present invention, an annular plate is mounted on a shaft with the inner ring fitted thereon at a position relatively dose to the blade projections.

According to this configuration, as the inner ring rotates, the annular plate rotates together with the inner ring through the shaft. With this rotation, in a device or equipment to which the ball bearing is applied, fluid which is present in the region sandwiched between the annular plate and the ball bearing is pulled by virtue of a viscous force and is made to rotate together with the annular plate. Therefore, the fluid present in the said region and the blade projections formed on the outer surface of the seal or the shield perform a relative rotational motion and the blade projections cause the fluid present in this region and in contact with the said outer surface to be scattered radially outwards from the inside by virtue of a centrifugal force. Thus, the blade projections exhibit a pumping action for the fluid which is in contact with the outer surface of the seal or the shield.

The ball bearing is disposed so that the side (one side of the ball bearing) with the blade projections-formed seal or shield provided thereon faces the space higher in pressure out of the spaces formed on both sides of the ball bearing, whereby the fluid present around the inner ring is scattered radially outwards in the higher-pressure space, with the result that the pressure of the fluid in this region (the region near the inner ring and sandwiched between the annular plate and the ball bearing) drops and the difference in pressure between fluids present near the inner ring in both spaces partitioned by the ball bearing decreases or reverses.

As a result, undesirable flowing or leakage of fluid from the higher-pressure space to the lower-pressure space through the ball bearing is suppressed and the amount of such flowing or leaking fluid is greatly reduced and hence the ball bearing can exhibit a high sealing performance. Moreover, the leakage of fluid (grease) sealed in the ball bearing to the lower-pressure space is suppressed and the amount of such leaking fluid is greatly decreased, thus permitting the ball bearing to exhibit a high sealing performance.

In a further preferred embodiment of the present invention, a plurality of through holes are formed circumferentially on or near an inner peripheral edge of the annular plate. According to this configuration, in the region near the inner ring sandwiched between the annular plate and the ball bearing and in a portion where the fluid pressure drops, a high-pressure fluid is supplied under reduced pressure constantly through the plural through holes from the higher-pressure space formed on the side opposite to the ball bearing with respect to the annular plate. Therefore, it is possible to establish a circulation path free of any difficulty in flowing for the fluid which undergoes the pumping action and it is possible to let the pumping action of the blade projections to proceed smoothly.

### BRIEF DESCRIPTION OF THE DRAWINGS

Fig. 1 is a partial, vertical sectional view of a ball bearing sealing structure according to an embodiment (first embodiment) of the present invention referred to in the above first aspect;
Fig. 2 is a front view thereof;
Fig. 3 is a partial, vertical sectional view of a ball bearing sealing structure according to an embodiment (second embodiment) of the present invention referred to in the above second aspect;
Fig. 4 is a partial front view of an annular plate used in a ball bearing sealing structure according to an embodiment (third embodiment) of the present invention referred to in the above third aspect;
Fig. 5 illustrates a conventional example; and
Fig. 6 illustrates another conventional example.

### DETAILED DESCRIPTION OF PREFERRED EMBODIMENTS

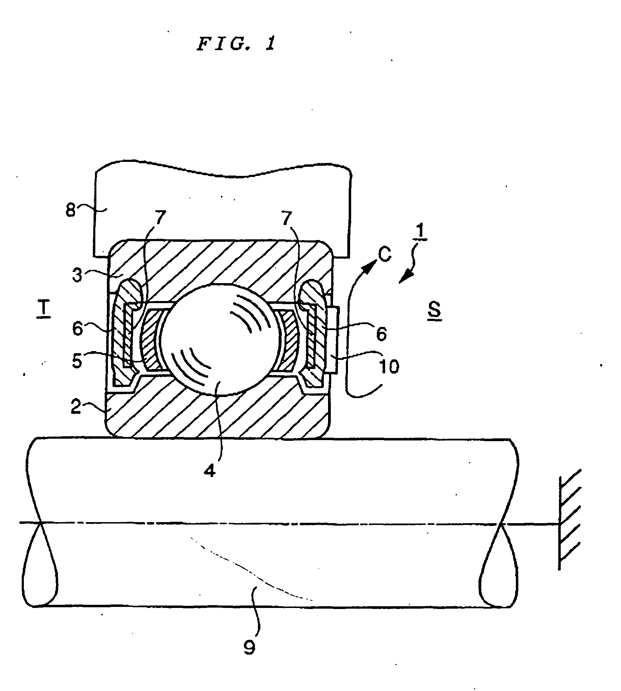

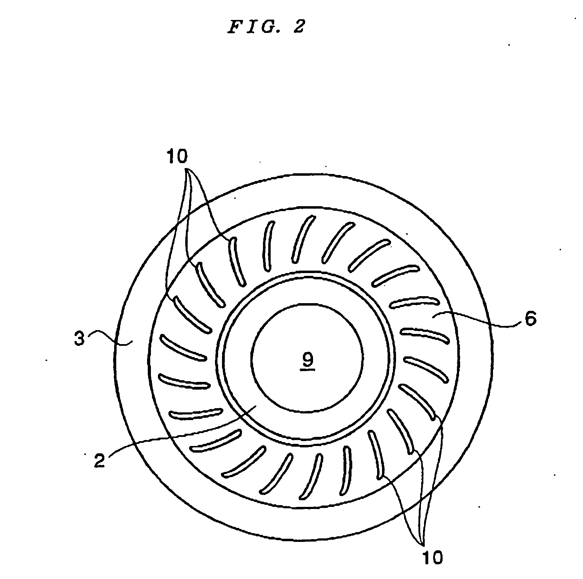

A description will be given below about an embodiment (first embodiment) of the present invention referred to in the foregoing first aspect and illustrated in Figs. 1 and 2.

In a ball bearing 1 to which the sealing structure of the first embodiment is applied, as shown in Figs. 1 and 2, a plurality of balls 4 are inserted into and held between a raceway groove formed on the outer peripheral surface of an inner ring 2 and a raceway groove formed on the inner peripheral surface of an outer ring 3 by means of a retainer 5. On both sides of the ball bearing 1 are provided seals 6 which are formed of a rubber material and which are fitted in the outer ring 3. Ends of the seals 6 are not in contact with the inner ring 2, with a slight gap formed therebetween. Thus, the ball bearing 1 has the structure and form of a double seal/non-contact seal ball bearing. A core material 7 is fitted in an inner surface of each seal 6 by molding.

The ball bearing 1 is used so that the outer ring rotates. Therefore, in a device or equipment to which the ball bearing 1 is applied, the outer ring 3 is fitted from the inside into a circular hole formed in a wall 8 of a component which belongs to a rotating side, while the inner ring 2 is fitted on a fixed shaft 9 from the outside.

Of both spaces S and T partitioned by the ball bearing 1, the righthand space S in Fig. 1 is held at a higher pressure than the left-hand space T and, for example, can be a space for the passage of discharge fluid (say, discharge air) in a fluid machine or can be a grease storing space within a gear box of a motor-driven tool.

As to the seal 6 fitted in the outer ring 3 on one side of the ball bearing 1 which faces the space S, a large number of blade projections 10 are formed radially on the outer surface of the seal. It is preferable that the blade projections 10 be formed by molding integrally with the body portion of the seal 6. The blade projections 10 are designed to have optimum length, thickness, height and shape so that they can exert an effective pumping action on the fluid in the space S, as will be described later. Although in this first embodiment the blade projections 10 are curved, they may be formed in a rectilinear shape.

The seals 6 fitted in the outer ring 3 on both sides of the ball bearing 1 hold grease sealed in the interior of the ball bearing so as to prevent leakage of the grease to the exterior and protect the ball bearing so as not to permit the invasion of foreign matter and dust from the exterior to the interior of the bearing. Where there is a pressure difference between both spaces S and T formed on both sides of the ball bearing 1, it is possible to let the sealing function be also exhibited partially so as to prevent flowing or leakage of fluid from the higher-pressure space S to the lower-pressure space T.

Since in this first embodiment a large number of blade projections 10 are formed radially on the outer surface of the seal (hereinafter referred to as the "high pressure-side seal") 6 provided on one side of the ball bearing 1 which faces the higher-pressure space S, the following sealing effects can be expected in addition to the above-mentioned sealing effects.

When the outer ring 3 rotates, the seals 6 rotate together with the outer ring, and the blade projections 10 formed on the outer surface of the high pressure-side seal 6 causes fluid (e.g., air or grease) which is in contact with the said outer surface to be scattered radially outwards from the inside (see a streamline C in Fig. 1) by virtue of a centrifugal force in an apparatus or equipment to which the ball bearing 1 is applied. That is, the blade projections 10 exhibit a pumping action for the fluid which is in contact with the outer surface of the high pressure-side seal 6.

Then, in the higher-pressure space S, the fluid present around the inner ring 2 is scattered radially outwards, so that the fluid pressure in this region drops and the pressure difference between the fluids present near the inner ring in both spaces S and T partitioned by the ball bearing 1 decreases or reverses. The "fluid present near the inner ring 2" mainly indicates the fluid present in a side region of the inner ring 2 which includes a portion facing the gap formed between the end of each seal 6 and the outer peripheral surface of the inner ring 2 and on which the pumping action of the blade projections 10 is exerted.

As a result, undesirable flowing or leakage of fluid from the higher pressure space S to the lower-pressure space T through the ball bearing 1 is suppressed and the amount of such flowing or leaking fluid is decreased remarkably, whereby the ball bearing 1 can exhibit a high sealing performance. Where grease is sealed in the ball bearing 1, leakage of the grease to the lower-pressure space T is suppressed and the amount of leaking grease is greatly decreased, permitting the ball bearing 1 to exhibit a high sealing performance.

Flowing or leakage of fluid from the higher-pressure space S to the lower-pressure space T through the ball bearing 1 occurs mainly through the gap between the inner and outer rings 2, 3 of the ball bearing1, but can also occur through a slight gap formed between the inner ring 2 and the fixed shaft 9.

In this first embodiment the seal 6 may be substituted by a shield and such blade projections 10 as described above may be formed on an outer surface of the shield. Also in this case the ball bearing 1 can exhibit a high sealing performance.

The material of each seal 6 or shield and how to form it are not specially limited. There may be adopted any of the following known materials (metals, plastics, thermoplastic elastomers, and synthetic rubbers) and known forming methods.

As examples of metallic materials are mentioned cold rolled steel plate, stainless steel, spring steel, aluminum alloy, and copper alloy.

As examples of plastics are mentioned such thermoplastic resins as polyamide, polyacetal, polybutyrene terephthalate, polyethylene terephthalate, polycarbonate, and polyimide resins.

As examples of thermoplastic elastomers are mentioned polyamide, polyester, polyurethane, polyolefine, polystyrene, and polyvinyl chloride elastomers.

As examples of synthetic rubbers are mentioned nitrile, acrylic, silicone, fluorine-containing, and ethylene-propylene rubbers.

As suitable methods for forming a metallic shield and a reinforcing ring are mentioned plastic working methods such as press working.

As examples of the method for forming a seal or a member as a constituent of the seal using a plastic or a thermoplastic elastomer there are mentioned injection molding, compression molding, and transfer molding.

Also as to the material of the inner and outer rings 2, 3 and rolling elements (balls) 4 which constitute the ball bearing 1 in this first embodiment, no special limitation is placed thereon. Examples include metals such as iron and steel, ceramics and plastics. These may be used each alone or in combination.

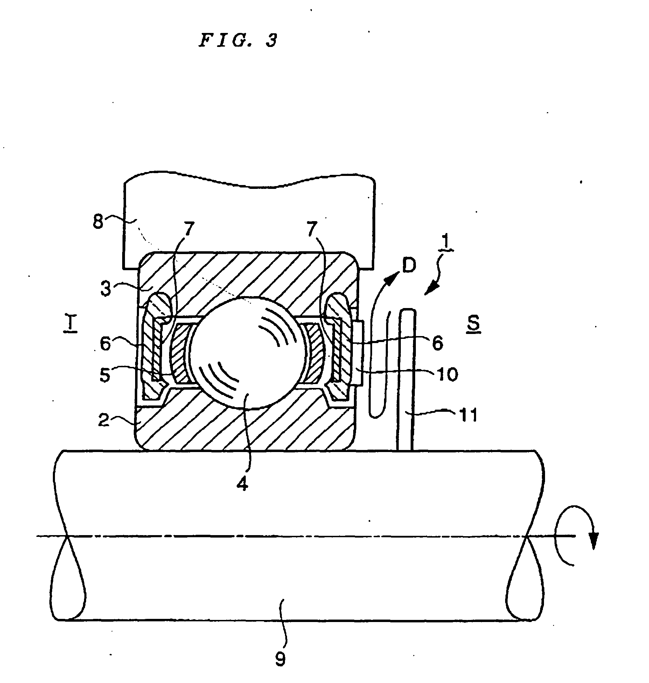

The following description is now provided about an embodiment (second embodiment) of the present invention referred to in the foregoing second aspect which is illustrated in Fig. 3.

Fig. 3 is a partial, vertical sectional view of a ball bearing sealing structure according to the second embodiment, in which the same portions as in the ball bearing sealing structure of the first embodiment are identified by the same reference numerals as in the first embodiment.

As shown in Fig. 3, the sealing structure of the ball bearing 1 in this second embodiment is different in structure from the ball bearing sealing structure of the first embodiment only in that an annular plate 11 is mounted on the shaft (rotary shaft) 9 with the inner ring 2 fitted thereon, at a position relatively close to the blade projections 10. Regarding how to use, a difference is recognized only in that the ball bearing 1 in this second embodiment is used under rotation of the inner ring 2.

In the above points the ball bearing sealing structure of the second embodiment is different from that of the first embodiment, but there is no other difference between the two, so detailed explanations will here be omitted.

Since the second embodiment is constructed as above, the following sealing effects can be obtained.

As the inner ring 2 rotates, the annular plate 11 rotates together with the inner ring 2 through the rotary shaft 9. Then, in a device or equipment to which the ball bearing 1 is applied, the fluid present in the region sandwiched between the annular plate 11 and the ball bearing 1 is pulled by virtue of a viscous force and is made to rotate together with the annular plate 11, so that the fluid present in this region and the blade projections 10 formed on the outer surface of the high pressure-side seal 6 perform a relative rotational motion, and the blade projections 10 cause the fluid (air or grease) which is in contact with the outer surface of the high pressure-side seal 6 in this region to be scattered radially outwards from the inside by virtue of a centrifugal force. At the same time, to make up for the fluid thus scattered, there is created a fluid flow advancing from the outer periphery of the annular plate 11 toward the center thereof along the inner surface of the annular plate 11 (see a streamline D in Fig. 3). That is, the blade projections 10 exhibit a pumping action for the fluid which is in contact with the outer surface of the seal 6.

Consequently, in the higher-pressure space S out of both spaces S and T partitioned by the ball bearing 1, the fluid present near the inner ring 2 is scattered radially outwards, the fluid pressure in this region (the region near the inner ring 2 and sandwiched between the annular plate 11 and the ball bearing 1) drops and the difference in pressure between the fluids present near the inner ring 2 in both spaces S and T partitioned by the ball bearing 1 decreases or reverses.

As a result, undesirable flowing or leakage of fluid from the higher-pressure space S to the lower-pressure space T through the ball bearing 1 is suppressed and the amount of such flowing or leaking fluid is decreased to a remarkable extent, thus permitting the ball bearing 1 to exhibit a high sealing performance. Where grease is sealed in the ball bearing, leakage of the grease to the lower-pressure space T is suppressed and the amount of such leaking grease is greatly reduced, whereby the ball bearing 1 can exhibit a high sealing performance.

Also in this second embodiment the seal 6 may be substituted by a shield, and even if such blade projections 10 as described above are formed on the outer surface of the shield, the ball bearing 1 can exhibit a high sealing performance to the same extent as above.

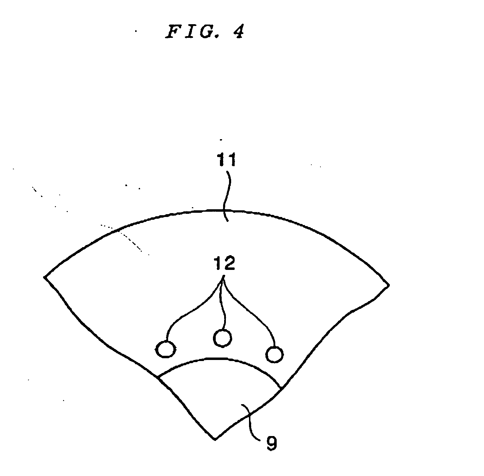

Description is now directed to an embodiment (third embodiment) of the present invention referred to in the foregoing third aspect which is illustrated in Fig. 4.

Fig. 4 is a front view showing a portion of an annular plate used in a ball bearing sealing structure according to this third embodiment, in which the same portions as in the ball bearing sealing structure of the previous second embodiment are identified by the same reference numerals as in the second embodiment.

In the sealing structure of a ball bearing 1 according to this third embodiment, as shown in Fig. 4, a plurality of through holes 12 are formed circumferentially in the vicinity of an inner peripheral edge of the annular plate 11 used therein. The plural through holes 12 may be formed by cutting off the inner peripheral edge of the annular plate 11 each in a semicircular shape. The size of each through hole 12 is set to an appropriate size in relation to the pumping action of the blade projections 10.

Although the ball bearing sealing structure of the third embodiment is different in the above point from the ball bearing sealing structure of the previous second embodiment, there is no other different point between the two, so a detailed description will here be omitted.

Since the third embodiment is constructed as above, it is not necessary to let fluid reciprocate within the narrow region sandwiched between the annular plate 11 and the ball bearing 1 (see the streamline D in Fig. 3), and a high-pressure fluid is constantly replenished under reduced pressure into a fluid pressure dropping portion in the region near the inner ring 2 included in the said narrow region through the plural through holes 12 from the higher-pressure space S located on the side opposite to the ball bearing 1 with respect to the annular plate 11, whereby it is possible to establish a circulation path free of any difficulty in flowing for the fluid which undergoes the pumping action. In this way the pumping action of the blade projections 10 can be allowed to proceed smoothly and the foregoing effects attained by the second embodiment can be further promoted.

Although the ball bearings 1 described in the above first to third embodiments have the structure and form of a double-seal/non-contact type seal ball bearing or a double-shield/non-contact type shield ball bearing, no limitation is made thereto. They may be of various other structures and forms, including double-seal/contact type, single-seal/non-contact type, and single-seal/contact type seal ball bearings, double-shield/ contact type, single-shield/non-contact type, and single-shield/contact type shield ball bearings, seal ball bearings having a seal of a double structure, and shield ball bearings having a shield of a double structure.

Various changes and modifications may be made within the scope not departing from the gist of the present invention.

## Claims

1. A bearing comprising:
inner (2) and outer (3) rings spaced to define an annular gap therebetween, said gap extending from a high pressure side (S) to a low pressure side (T);
a plurality of rolling elements (4) held between said inner (2) and outer (3) rings for relative rotation between said inner and outer rings; **characterized in that** the bearing further comprises
a seal (6) fixed to the outer ring (3) on the high pressure side (S) and extending across said gap to a point closely adjacent the inner ring;
and a plurality of blades (10) protruding from and extending radially along a high-pressure facing surface of said seal for reducing ambient pressure adjacent a high-pressure side surface of said inner ring (2), to thereby reduce fluid flow from the high-pressure side (S), through said gap, to the low pressure side (T).

2. A bearing according to claim 1 wherein an annular notch is provided at a juncture of an inner peripheral surface and a high pressure side surface of the inner ring (2) and wherein an inner peripheral edge of said seal (6) extends to within said annular notch.

3. A bearing according to claim 1 or 2 wherein said seal (6) has an outer peripheral edge fixed to said outer ring (3).

4. A bearing according to one of the preceding claims, further comprising a rotary shaft (9) on which said inner ring (2) is mounted for rotation therewith; and an annular plate (11) fixed to and extending radially from the rotary shaft (9) and in parallel with the high pressure side surface of said inner ring (2) with an annular gap therebetween.

5. A bearing according to claim 4 wherein a plurality of through holes (12) are formed circumferentially arranged in said annular plate (11).

6. A bearing according to claim 5 wherein said through holes (12) are formed on or near an inner peripheral edge of said annular plate (11).

7. A bearing according to one of the preceding claims, comprising
a pair of seals (6) fixed to the outer ring (3) on opposing high pressure and low pressure sides of said rolling elements (4) and extending across said gap to a point closely adjacent the inner ring.

8. A bearing according to one of the preceding claims, wherein said outer ring (3) is fixed and said inner ring (2) is rotatable.

9. A bearing according to one of the preceding claims, wherein said blades (10) are perpendicular to the high-pressure outer surface of the seal (6) on said high-pressure side.

10. A bearing according to one of the preceding claims, wherein said high-pressure facing surface of said seal (6) is parallel to radially extending side surfaces of said rings (2,3) and wherein said blades (10) are perpendicular to said high-pressure facing surface of said seal (6).

## Patentansprüche

1. Lager, umfassend:
einen inneren Ring (2) und einen äußeren Ring (3), die beabstandet sind, um einen ringförmigen Spalt dazwischen auszubilden, wobei sich der Spalt von einer Hochdruckseite (S) zu einer Niederdruckseite (T) erstreckt;
eine Vielzahl von Wälzkörpern (4), die zwischen dem inneren Ring (2) und dem äußeren Ring (3) für relative Drehung zwischen dem inneren Ring und dem äußeren Ring gehalten werden;
**dadurch gekennzeichnet, dass** das Lager weiterhin umfasst:
eine Dichtung (6), die auf der Hochdruckseite (S) an dem äußeren Ring (3) befestigt ist und sich über den Spalt bis zu einem Punkt eng anliegend an dem inneren Ring erstreckt;
sowie eine Vielzahl von Flügeln (10), die von der der Hochdruckseite zugewandten Seite der Dichtung radial hervorstehen und sich entlang dieser radial erstrecken, um den Umgebungsdruck neben einer hochdruckseitigen Fläche des inneren Ringes (2) zu senken, um **dadurch** den Fluidstrom von der Hochdruckseite (S) über den Spalt zu der Niederdruckseite (T) zu reduzieren.

2. Lager nach Anspruch 1, wobei eine ringförmige Kerbe an einem Verbindungspunkt einer inneren Umfangsfläche und einer hochdruckseitigen Fläche des inneren Ringes (2) bereitgestellt wird und wobei sich ein innerer Umfangsrand der Dichtung (6) nach innerhalb der ringförmigen Kerbe erstreckt.

3. Lager nach Anspruch 1 oder Anspruch 2, wobei die Dichtung (6) einen äußeren Umfangsrand aufweist, der an dem äußeren Ring (3) befestigt ist

4. Lager nach einem der vorhergehenden Ansprüche, des Weiteren umfassend: eine Drehwelle (9), an der der innere Ring (2) für Drehung mit derselben befestigt ist; sowie eine ringförmige Platte (11), die an der Drehwelle (9) befestigt ist und sich radial von der Drehwelle (9) erstreckt und die parallel zu der hochdruckseitigen Fläche des inneren Ringes (2) ist, wobei ein ringförmiger Spalt dazwischen vorliegt.

5. Lager nach Anspruch 4, wobei eine Vielzahl von Durchgangsbohrungen (12) um den Umfang in der ringförmigen Platte (11) angeordnet sind.

6. Lager nach Anspruch 5, wobei die Durchgangsbohrungen (12) auf dem oder in der Nahe des Umfangsrandes der ringförmigen Platte (11) ausgebildet sind.

7. Lager nach einem der vorhergehenden Ansprüche, das umfasst:
ein Paar Dichtungen (6), die an dem äußeren Ring (3) auf gegenüberliegenden Hochdruck- und Niederdruckseiten der Wälzkörper (4) angeordnet sind und sich über den Spalt zu einem Punkt eng anliegend an dem inneren Ring erstrecken.

8. Lager nach einem der vorhergehenden Ansprüche, wobei der äußere Ring (3) feststehend ist und wobei der innere Ring (2) drehbar ist.

9. Lager nach einem der vorhergehenden Ansprüche, wobei die Flügel (10) senkrecht zu der Hochdruck-Außenseite der Dichtung (6) auf der Hochdruckseite sind.

10. Lager nach einem der vorhergehenden Ansprüche, wobei die der Hochdruckseite zugewandte Fläche der Dichtung (6) parallel zu den sich radial erstreckenden Seitenflächen der Ringe (2, 3) ist und wobei die Flügel (10) senkrecht zu der der Hochdruckseite zugewandten Fläche der Dichtung (6) sind.

## Revendications

1. Roulement comprenant :
une bague interne (2) et une bague externe (3) qui sont espacées pour définir un intervalle annulaire entre elles, ledit intervalle s'étendant à partir d'un côté à haute pression (S) vers un côté à basse pression (T) ;
une pluralité d'éléments de roulement (4) qui sont maintenus entre lesdites bagues interne (2) et externe (3) en vue d'une rotation relative entre lesdites bagues interne et externe ;
**caractérisé en ce que** le roulement comprend en outre
un joint (6) qui est fixé sur la bague externe (3) sur le côté à haute pression (S) et s'étendant en travers ledit intervalle jusqu'à un point qui est étroitement adjacent à la bague interne ;
et une pluralité d'ailettes (10) faisant saillie et s'étendant dans le plan radial le long d'une surface dirigée vers le côté haute pression dudit joint, dans le but de réduire la pression ambiante adjacente à une surface latérale à haute pression de ladite bague interne (2), afin de réduire ainsi le flux de fluide à partir du côté à haute pression (S), à travers ledit intervalle, vers le côté à basse pression (T).

2. Roulement, selon la revendication 1, dans lequel une rainure annulaire est prévue au niveau d'une jonction entre une surface périphérique interne et une surface latérale à haute pression de la bague interne (2), et dans lequel un bord périphérique interne dudit joint (6) s'étend jusque vers ladite rainure annulaire.

3. Roulement, selon la revendication 1 ou 2, dans lequel ledit joint (6) possède un bord périphérique externe lequel est fixé sur ladite bague externe (3).

4. Roulement, selon l'une quelconque des revendications précédentes, comprenant en outre un arbre rotatif (9) sur lequel est montée ladite bague interne (2) en vue d'une rotation avec celui-ci ; et une plaque annulaire (11) laquelle est fixée sur l'arbre rotatif (9) et s'étend dans le plan radial à partir de cet arbre, et est parallèle à la surface latérale à haute pression de ladite bague interne (2) alors qu'un intervalle annulaire est situé entre ces deux postes.

5. Roulement, selon la revendication 4, dans lequel une pluralité de trous traversants (12) sont formés dans le plan circonférentiel et sont agencés dans ladite plaque annulaire (11) .

6. Roulement, selon la revendication 5, dans lequel lesdits trous traversants (12) sont formés sur un bord périphérique interne de ladite plaque annulaire (11), ou à proximité de ce bord périphérique interne.

7. Roulement, selon l'une quelconque des revendications précédentes, comprenant
une paire de joints (6) lesquels sont fixés sur la bague externe (3) sur des côtés opposés à haute pression et à basse pression desdits éléments de roulement (4) et s'étendant en travers dudit intervalle jusqu'à un point qui est étroitement adjacent à la bague interne.

8. Roulement, selon l'une quelconque des revendications précédentes, dans lequel ladite bague externe (3) est fixe et ladite bague interne (2) est rotative.

9. Roulement, selon l'une quelconque des revendications précédentes, dans lequel lesdites ailettes (10) sont perpendiculaires à la surface externe à haute pression du joint (6) sur ledit côté haute pression.

10. Roulement, selon l'une quelconque des revendications précédentes, dans lequel ladite surface dirigée vers le côté haute pression dudit joint (6) est parallèle à des surfaces latérales s'étendant dans le plan radial desdites bagues (2, 3), et dans lequel lesdites ailettes (10) sont perpendiculaires à ladite surface dirigée vers le côté haute pression dudit joint (6).
